# EUROPEAN PATENT APPLICATION

(11) **EP 2 412 953 A2**
(43) Date of publication of application: **01.02.2012**
(21) Application number: 11172127.0
(22) Date of filing: 30.06.2011
(51) Int. Cl.: F02C 7/224

(54) **Inorganic coke resistant coatings to prevent aircraft fuel system fouling**

(30) Priority: 30.07.2010 US 847497
(71) Applicant: Hamilton Sundstrand Corporation, Windsor Locks, CT 06096-1010 (US)
(72) Inventor: Gage, Marc E., Feeding Hills, MA Massachusetts 01030 (US); Smith, Blair A., South Windsor, CT Connecticut 06074 (US)
(74) Representative: Tomlinson, Kerry John

(57) **Abstract**

A fuel system for delivering fuel (32) to an engine includes a fuel tank, a hot section (26) in fluid communication with the fuel tank for delivering fuel for combustion by the engine, and a ceramic coating (30) applied to at least a portion of the hot section (26) for reducing fuel coking. The ceramic coating (30) is selected from carbides, nitrides, carbonitrides, silicides and mixtures thereof.

## Description

### BACKGROUND

The present invention relates to fuel systems and associated methods of manufacture, and more particularly to those suitable for use with gas turbine engines.

Gas turbine engines, such as those suitable for use with aircraft, generally use hydrocarbon-based fuels. The elevated temperatures at which prior art gas turbine engine fuel systems operate-up to approximately 121° C (250° F)-can cause chemical reactions to occur referred to in the art as fuel "coking". Coking is often catalyzed by surfaces of fuel system components wetted by hydrocarbon-based fuel, and some materials (e.g., copper) are more likely than others to catalyze coking. Once formed, carbonaceous materials can undesirably accumulate on fuel system components such as conduits, valve surfaces, filter screens, etc., and can lead to malfunctions, decreased fuel flow, binding system components and/or increased needs for repair or maintenance.

These kinds of malfunctions have been observed in fuel systems that operate at a fuel temperature of approximately 250° F (121° C). As systems are developed and improved, it is expected that they will operate at a fuel temperature of approximately 275° F (135° C), which poses additional risks of system malfunctions due to fuel coking.

### SUMMARY

A fuel system for delivering fuel to an engine according to the present invention includes a fuel tank, a hot section in fluid communication with the fuel tank for delivering fuel for combustion by the engine, and a coating applied to at least a portion of the hot section for reducing fuel coking. The coatings include ceramic materials such as carbides, nitrides, carbonitrides and silicides. Examples are boron carbide, titanium nitride, chromium nitride, titanium aluminum carbonitride, titanium aluminum silicon carbonitride, titanium carbide, titanium aluminum nitride, titanium carbonitride, chromium nitride and boron nitride.

The coating may be applied by vapor deposition or other methods on discrete pieces of the fuel system prior to assembly. The coatings exhibit excellent adhesion to common fuel system surfaces. Since the coatings are thin, care should be taken to have smooth surfaces where the coatings are applied. Smoothness should be no more than 16 micro-inches (0.0004 mm) Surface Roughness RA and as low as 4 micro-inches (0.0001 mm) Surface Roughness RA. The coatings have a low coefficient of friction and mold release characteristics creating surfaces that diminish the adhesion of foreign substances.

### BRIEF DESCRIPTION OF THE DRAWINGS

FIG. 1 is a block diagram of an aircraft having a fuel system according to the present invention.

FIG. 2 is a cross-sectional view of a coated component of the fuel system.

FIG. 3 is a flow chart of a method of making the fuel system according to the present invention.

### DETAILED DESCRIPTION

In general, the present invention provides a system and associated method of making a fuel system at least partially coated to reduce coking and fouling. In one embodiment, the coating comprises a ceramic material that is deposited on the surface to be coated, such as boron carbide, titanium nitride, chromium nitride and boron nitride. The coatings reduce the formation and deposition of carbonaceous material in the fuel system, and can help enable elevated fuel system operating temperatures (e.g., at least approximately 135° C (275° F)). The inhibition of undesirable chemical reactions and prevention of deposit adhesion provides a cleaner fuel system with less system fouling, fewer resulting malfunctions, and longer service intervals.

The coating may be uniformly applied by vapor deposition (chemical or physical) on discrete pieces of the fuel system prior to assembly. In an exemplary embodiment, discrete fuel system components are coated and then assembled together in the fuel system.

The coatings of this invention are applied in a very thin layer. An example range of coating thickness is from about 1 micron to about 10 microns, with a further example range being about 1 micron to about 5 microns. This thin coating enables use of parts requiring very tight tolerances. As noted above, the surfaces being coated should be smooth and not have imperfections or other matter that would interfere with the formation of these thin coatings. These ceramic coatings are very hard and possess a high durability relative to organic style coatings.

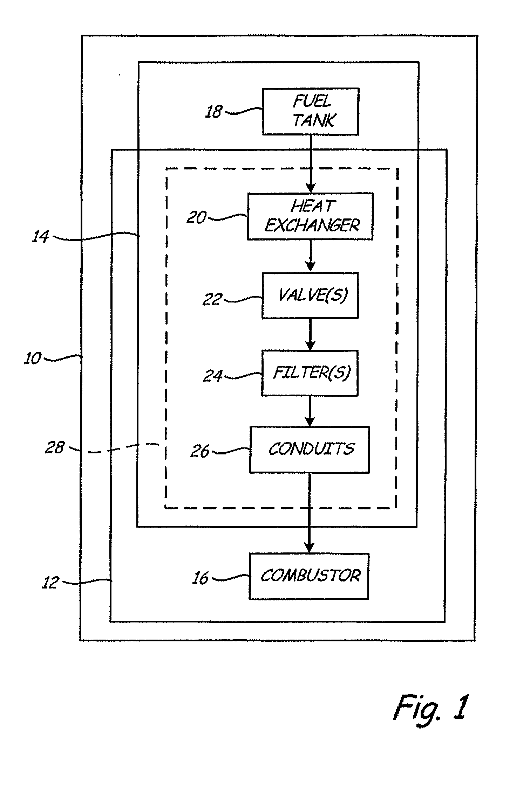

FIG. 1 is a block diagram of an aircraft 10 that includes a gas turbine engine 12 and a fuel system 14. The gas turbine engine 12 includes a combustor 16 that accepts fuel delivered by the fuel system 14 for combustion, in order to power the aircraft 10. The aircraft 10 and the gas turbine engine 12 can include additional components not specifically shown.

In the illustrated embodiment, the fuel system 14 includes a fuel tank 18, a heat exchanger 20, one or more valves 22, one or more filters 24, and suitable conduits 26. The fuel tank 18 is carried on the aircraft 10, and can store a suitable hydrocarbon-based fuel for the gas turbine engine 12, such as known fuel formulations like Jet A and Jet A-1 (defined by industry specification ASTM D 1655) or JP-8 (defined by military specification MIL-DTL-83133). The heat exchanger 20 (e.g., a fuel/oil heat exchanger) is fluidically connected to the fuel tank 18. The valves 22, the filters 24, and the conduits 26 are fluidically connected between the heat exchanger 20 and the combustor 16, in any suitable arrangement. It should be understood that the fuel system 14 illustrated in FIG. 1 is provided merely by way of example and not limitation. The fuel system 14 can include additional components not shown, such as a fuel pump and a fuel metering unit (FMU), and can have other configurations and arrangements as desired for particular applications.

During operation, thermal energy is transferred to fuel passing through the heat exchanger 20. Portions of the fuel system 14 from the heat exchanger 20 downstream to the combustor 16 of the gas turbine engine 12 are generally referred to as a hot section 28, which is designated in FIG. 1 by dashed lines. Fuel in the hot section 28 is generally at an elevated operating temperature, that is, it is at a temperature generally greater than room temperature or ambient temperature. In one embodiment, fuel in the hot section 28 has an operating temperature of at least approximately 135° C (275° F). In other embodiments, the fuel can have higher or lower operating temperatures.

Portions of the fuel system 14 have a coating on selected surfaces exposed to fuel, which helps reduce a risk of coking by being relatively catalytically inactive with respect to typical hydrocarbon-based gas turbine engine fuels and also by reducing the ability of carbonaceous materials present in fuel from adhering to surfaces within the fuel system 14. The ceramic coating is generally fuel resistant, anti-fouling, thin, has relatively good adhesion properties, is thermally stable at or above elevated gas turbine engine fuel system operating temperatures, and is durable.

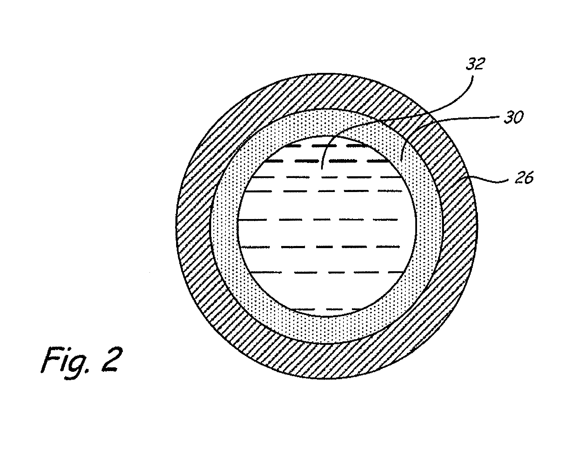

FIG. 2 is a cross-sectional view of one of the conduits 26 of the fuel system 14 having a coating 30. As shown in FIG. 2, a liquid, hydrocarbon-based fuel 32 is present within the conduit 26, which can be made of a metallic material. The coating 30 is located along interior surfaces of the conduit 26, and forms essentially a barrier between the fuel 32 and the metallic material of the conduit 26. It should be noted that FIG. 2 is not necessarily shown to scale.

Coating 30 comprises a ceramic coating such as carbides, nitrides, carbonitrides and silicides. Examples are boron carbide, titanium nitride, chromium nitride, titanium aluminum carbonitride, titanium aluminum silicon carbonitride, titanium carbide, titanium aluminum nitride, titanium carbonitride, chromium nitride and boron nitride. Coating 30 has a thickness of from about 1 micron to about 10 microns and may be limited from about 1 micron to about 5 microns, as noted above. These coatings 30 exhibit excellent adhesion to common fuel system surfaces 26 that are smooth and do not contain imperfections. Coatings 30 will inhibit the adhesion of carbonaceous deposits of the fuel wetted surfaces of the fuel system 14. In addition, coatings 30 will insulate the fuel from the metallic surfaces of the fuel system 14 that might otherwise catalyze the chemical reactions that generate the coke.

Examples of commercially available coatings are Diamond Black boron carbide, Ion Bond 7-22 titanium nitride and Ion bond 7-24 chromium nitride. These coatings have thermal capability well in excess of 275° F (135° C) and use in an aircraft fuel system would allow the aircraft to operate at fuel system temperatures that would otherwise generate an unacceptable level of carbonaceous deposits and foul the fuel system.

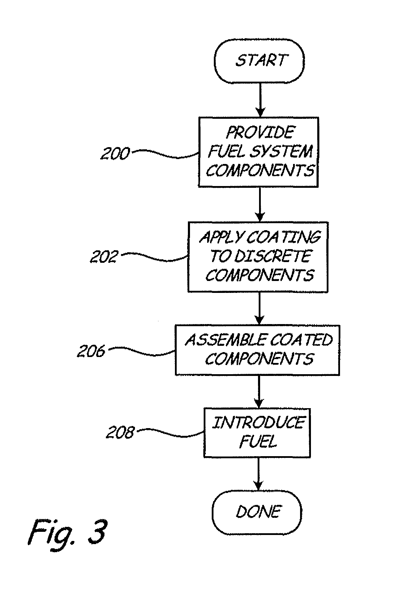

FIG. 3 is a flow chart of a method of making the fuel system 14. In this embodiment, components of the fuel system 14 are provided in at least partially unassembled state (step 200). In other words, the fuel system 14 is not fully assembled, but rather discrete components of the fuel system 14 are available essentially individually, though it is possible for some components to be assembled together (e.g., certain parts can be connected together). Next, the coating 30 is applied to the discrete components of the fuel system 14 (step 202). Coating application at step 202 can be accomplished through vapor deposition (chemical or physical). The coating 30 can be applied to components of the fuel system 14 individually, or to a group of components essentially simultaneously. Next the coated components are assembled together to define the completed fuel system 14 (step 206), and the fuel 32 can be introduced to the fuel system 14 (step 208). Operation of the fuel system 14, the gas turbine engine 12 and the aircraft 10 can then begin. It should be noted that the method of making the fuel system 14 described with respect to FIG. 3 can optionally include additional steps not specifically mentioned.

Those of ordinary skill in the art will appreciate that the present invention provides numerous technical effects. For example, the present invention can help aircraft fuel systems achieve operating temperatures of at least approximately 135° C (275° F) while also helping to provide extended operating hour overhaul limits. A coated fuel system according to the present invention can help reduce undesirable coking, and can help permit fuel system operating temperatures that would otherwise generate an unacceptable level of carbonaceous deposits and fouling of the fuel system. Moreover, use of a ceramic coating according to the present invention helps reduce any accumulation of carbonaceous materials on fuel system components, and allows for much thinner coating thicknesses than with other materials such as Teflon® brand coatings. Furthermore, the present invention can help enable the use of relatively small and light heat exchangers.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims. For example, the present invention can be applied to fuel systems of nearly any type of combustion engine, such as shipboard diesel engines for marine applications, automotive and locomotive applications and refinery applications.

## Claims

1. A fuel system for delivering fuel (32) to an engine (12), the system comprising:
a hot section (28) in fluid communication with a fuel tank (18) to deliver fuel for combustion by the engine; and
a coating (30) applied to at least a portion of the hot section for reducing fuel coking, wherein the coating comprises:
a ceramic coating selected from the group consisting of carbides, nitrides, carbonitrides, silicides and mixtures thereof.

2. The system of claim 1, wherein the ceramic coating is selected from the group consisting of boron carbide, titanium nitride, chromium nitride, titanium aluminum carbonitride, titanium aluminum silicon carbonitride, titanium carbide, titanium aluminum nitride, titanium carbonitride, chromium nitride, boron nitride and mixtures thereof.

3. The system of claim 1 or 2, wherein the thickness of the coating ranges from 1 micron to 10 microns.

4. The system of claim 3, wherein the thickness of the coating ranges from 1 micron to 5 microns.

5. The system of claim 1, 2, 3 or 4, wherein the portion of the hot section is smooth.

6. The system of any preceding claim, wherein the hot section is configured to operate at 135°C (275°F) or hotter and the hot section comprises:
a fuel/oil heat exchanger (20);
a valve (22);
a filter (24); and
a conduit (26),
wherein the fuel/oil heat exchanger, the valve and the filter are in fluid communication with each other.

7. The system of any preceding claim, wherein the hot section includes a metallic component; and wherein the ceramic coating provides a barrier between the fuel and the metallic component in the hot section for reducing fuel coking.

8. A method comprising:
providing discrete fuel system components (20, 22, 24, 26) for a gas turbine engine (12);
applying a ceramic coating (30) compound selected from the group consisting of carbides, nitrides, carbonitrides, silicides and mixtures thereof to at least a portion of each of the discrete fuel system components, wherein the ceramic coating compound attaches to exposed surfaces of each of the discrete fuel system components; and
assembling the coated discrete fuel system components together in fluid communication with each other.

9. The method of claim 8, wherein ceramic coating compound is selected from the group consisting of boron carbide, titanium nitride, chromium nitride, titanium aluminum carbonitride, titanium aluminum silicon carbonitride, titanium carbide, titanium aluminum nitride, titanium carbonitride, chromium nitride, boron nitride and mixtures thereof.

10. The method of claim 8 or 9, wherein the coating thickness ranges from 1 micron to 10 microns, preferably wherein the coating thickness ranges form 1 micron to 5 microns.

11. The method of claim 8, 9 or 10, wherein the step of applying a coating compound to at least a portion of each of the discrete fuel system components comprises vapor deposition on at least portions of the discrete fuel system components.

12. The method of claim 8, 9, 10 or 11, wherein the coating compound is applied to discrete fuel system components of a hot section (28) of the fuel system.

13. The method of claim 12, wherein the coating compound is applied to a filter (24) in the hot section; and/or
wherein the coating compound is applied to a valve (22) in the hot section; and/or
wherein the coating compound is applied to a conduit (26) in the hot section.

14. The method of claim 12 or 13, wherein the portion of each of the discrete fuel system components is free from imperfections capable of disrupting the coating prior to applying the coating.

15. The method of claim 12, 13 or 14 and further comprising:
after assembling the coated discrete fuel system components together, introducing fuel (32) into the coated assembled fuel system components; and
operating the fuel system at an operating temperature of at least about 135°C (275°F).
